# FASCICULE DE BREVET EUROPEEN

(11) **EP 1 176 481 B1**
(45) Date de publication et mention de la délivrance du brevet: **15.11.2006**
(21) Numéro de dépôt: 01401539.0
(22) Date de dépôt: 14.06.2001
(51) Int. Cl.: G05B 17/02

(54) **Methode et système pour estimer en temps réel le mode d'écoulement d'une veine fluide polyphasique, en tous points d'une conduite**
Verfahren und System zur Echtzeitschätzung des Durchflussmodes eines mehrphasiges Fluides in allen Punkten einer Leitung
Method and system for estimating in real time the flow-mode of a fluid stream in every point of a duct

(30) Priorité: 27.07.2000 FR 0009889
(43) Date de publication de la demande: 30.01.2002
(73) Titulaire: Institut Français du Pétrole, 92852 Rueil-Malmaison Cedex (FR)
(72) Inventeur: Duret, Emmanuel, 92500 Rueil-Malmaison (FR); Heintze, Eric, 92190 Meudon (FR); Rey-Fabret, Isabelle, 78000 Versailles (FR)

(56) Documents cités:
- US-A- 5 226 092
- US-A- 5 313 559
- US-A- 5 550 761
- US-A- 5 741 980
- US-A- 6 028 992

## Description

La présente invention concerne une méthode et un système pour estimer en temps réel le mode d'écoulement d'une veine fluide polyphasique en tous points d'une conduite comprenant l'utilisation des réseaux neuronaux.

### Etat de la technique

L'acheminement des hydrocarbures depuis les sites de production jusqu'aux unités de traitement constitue un maillon important de la chaîne pétrolière. C'est un maillon délicat en raison de la complexité des interactions entre les phases constituant les effluents transportés. Les opérateurs ont pour objectif premier d'atteindre une productivité optimale dans les meilleures conditions de sécurité. Ils doivent donc gérer au mieux la vitesse et la température, pour éviter des pertes de charges superflues, des dépôts indésirables et des irrégularités d'écoulement. La méthode généralement utilisée consiste à modéliser au mieux le transport de flux polyphasiques complexes de façon à fournir à chaque instant une image des écoulements dans les différentes parties de la chaîne de production, tenant compte de la constitution précise de l'effluent, les débits et pressions et les modes d'écoulement.

Il existe actuellement différents outils logiciels de simulation du transport de flux polyphasiques complexes, permettant à une stade précoce de concevoir des équipements de production adaptés.

Par les brevets US 5 550 761, FR 2.756.044 (US 6 028 992) et FR 2 756 045 (US 5 960 187) du demandeur, notamment, on connaît des méthodes et outils de modélisation permettant de simuler le transport de flux polyphasiques complexes en régime permanent ou transitoire et capables de prendre en compte des phénomènes d'instabilité qui se produisent du fait de la géométrie irrégulière du terrain où passe la conduite ou de la topographie de celle-ci, que les spécialistes désignent par « terrain slugging » ou « severe slugging ».

La complexité des outils de simulation est à l'image de celle des phénomènes modélisés. Précision et performances ne peuvent être obtenues qu'après un temps de modélisation relativement important qui s'avère difficilement compatible avec une gestion en temps réel. C'est pourquoi ces outils de modélisation ne peuvent en l'état servir à la gestion en temps réel de la production. Dans cette optique, il est ainsi apparu nécessaire de mettre en oeuvre des méthodes de modélisation permettant un bon compromis entre rapidité de calcul et précision des résultats.

L'invention a pour objet essentiel une méthode permettant seule ou en parallèle avec les méthodes de modélisation ci-dessus, de gérer en temps réel des paramètres d'une circulation de fluides en utilisant des réseaux neuronaux.

Les réseaux neuronaux définissent on le rappelle un mode de traitement de données simulant le fonctionnement des systèmes de neurones biologiques. Dans de tels réseaux, un élément réalise un calcul relativement simple tel qu'une somme pondérée des signaux présents à ses entrées appliquées à une fonction non-linéaire, qui détermine l'état de sa sortie. On utilise un nombre important de tels éléments interconnectés en série et en parallèle. Un choix convenable des facteurs de pondération permet au réseau de réaliser des fonctions complexes. Les réseaux dits à rétropropagation par exemple utilisent des couches multiples d'éléments définis ci-dessus. L'adaptation d'un tel réseau à une tâche précise est faite en « entraînant » le réseau sur un certain nombre d'exemples et en ajustant les facteurs de pondération pour chaque élément aux valeurs qui conviennent. On présente des valeurs d'entrée au réseau, on analyse la valeur de sortie produite par le réseau et on modifie les facteurs de pondération pour minimiser au mieux l'écart entre la valeur effective à la sortie et la valeur attendue dans l'exemple choisi. Après un entraînement suffisant, le réseau est adapté à répondre à de nouvelles valeurs d'entrée pour lesquelles la valeur de sortie n'est pas connue a priori et à produire une valeur de sortie adaptée. Dans son principe, un réseau de neurones procède selon une méthode de régression non linéaire, d'autant plus performante par rapport aux méthodes classiques.

On utilise de tels réseaux dans de nombreux domaines tels que la reconnaissance d'images, la résolution de problèmes d'optimisation, etc. Initialement, le réseau de neurones est une méthode adaptée à la classification automatique, d'où son utilisation en particulier pour la reconnaissance de formes. Pour ces applications, deux types de réseaux peuvent être mis en oeuvre, les réseaux MLP (Multi Layer Perceptron) ou les réseaux de Kohonen, bien connus des spécialistes.

L'art antérieur dans le domaine des réseaux neuronaux est illustré par les références suivantes :
- Dreyfus G., « Les réseaux de neurones » ; Mécanique Industrielle et matériaux, n°51, sept. 98 ;
- Lippman R. P., An Introduction to Computing with Neural Nets ; IEEE ASSP Magazine, April 1987 ; or
- Pinkus A., Approximation Theory of the MLP Model in Neural Networks ; Acta Numerica 1999.

Les réseaux sont maintenant également employés pour la modélisation non-linéaire de données statiques ou de processus dynamiques. Dans ce cas, ce sont majoritairement les réseaux MLP qui sont utilisés. Cette approche concerne actuellement des domaines d'applications comme, par exemple, la détection d'anomalies ou la prédiction boursière.

Un exemple d'utilisation de réseaux neuronaux est décrit par exemple dans le brevet FR -A- 2.786.568 du demandeur.

### La méthode selon l'invention

Dans le contexte de la gestion de production, les phénomènes à modéliser en temps réel sont fortement non linéaires et les paramètres intervenant dans la modélisation fort nombreux.

L'invention a pour objet une méthode pour estimer en temps réel le mode d'écoulement en tous points d'une conduite de structure que l'on peut définir par un certain nombre de paramètres de structure, d'une veine de fluide polyphasique définie par plusieurs grandeurs physiques et comprenant au moins une phase liquide et au moins une phase gazeuse, caractérisée en ce que la modélisation du mode d'écoulement comporte :
- la formation d'un réseau neuronal non linéaire avec une couche d'entrée avec autant d'entrées que de paramètres de structure et de grandeurs physiques, une couche de sortie avec autant de sorties que de grandeurs nécessaires à l'estimation du mode d'écoulement et au moins une couche intermédiaire ;
- la constitution d'une base d'apprentissage avec des tables prédéfinies reliant différentes valeurs obtenues pour les données de sortie aux valeurs correspondantes des données d'entrée ; et
- la détermination par itérations des facteurs de pondération de la fonction d'activation permettant de relier correctement les valeurs dans les tables des données d'entrée et de sortie.

La méthode comporte en outre de préférence une analyse des données de sortie du réseau de neurones permettant de trier, parmi les valeurs des données de sortie du réseau de neurones, les seules données pertinentes à prendre en compte dans la détermination itérative des coefficients de pondération de la fonction d'activation.

Un réseau neuronal traduit une fonction mathématique continue entre des données d'entrée et de sortie. Comme il produit en continu des résultats par des calculs directs reliant en permanence des données d'entrée et de sortie, on évite par conséquent les discontinuités liées à la résolution de systèmes d'équations, d'où un gain de temps appréciable et une simplification des résultats. Le caractère non linéaire des fonctions d'activation des réseaux de neurones les rend parfaitement adaptables à une modélisation de systèmes non linéaires.

La méthode comporte par exemple la formation d'un réseau totalement connecté et l'utilisation de neurones de sortie linéaires.

Comme fonction d'activation, on choisit par exemple une fonction identité.

Le système selon l'invention permet d'estimer en temps réel le mode d'écoulement en tous points d'une conduite de structure que l'on peut définir par un certain nombre de paramètres de structure, d'une veine de fluide polyphasique définie par plusieurs grandeurs physiques et comprenant au moins une phase liquide et au moins une phase gazeuse. Il comporte :
- des moyens pour déterminer les caractéristiques d'un réseau neuronal non linéaire avec une couche d'entrée avec autant d'entrées que de paramètres de structure et de grandeurs physiques, une couche de sortie avec autant de sorties que de grandeurs nécessaires à l'estimation du mode d'écoulement et au moins une couche intermédiaire ;
- des moyens de stockage d'une base d'apprentissage avec des tables prédéfinies reliant différentes valeurs obtenues pour les données de sortie aux valeurs correspondantes des données d'entrée ; et
- des moyens pour déterminer par itérations des facteurs de pondération d'une fonction d'activation permettant de relier correctement les valeurs dans les tables des données d'entrée et des données de sortie.

Le système comporte de préférence des moyens d'analyse des données de sortie du réseau de neurones permettant de trier, parmi les valeurs des données de sortie du réseau de neurones, les seules données pertinentes à prendre en compte dans la détermination itérative des coefficients de pondération de la fonction d'activation.

Le système développé par cette technique peut être utilisé par exemple en remplacement d'un outil développé par une technique classique (et donc relativement lent) dans le but de fournir des résultats compatibles avec une gestion des flux en temps réel. Les termes de cette mise en oeuvre sont développés ci-dessous.

### Présentation des figures

La méthode sera mieux comprise à la lecture de la description ci-après en se référant aux dessins sur lesquels :
- la Fig.1 qui montre un exemple de réseau neuronal construit pour relier des données hydrodynamiques d'entrée à des données de sortie portant sur des modes d'écoulement ; et
- les Fig. 2 et 3 illustrent deux cas de voisinages topologiques différents conduisant à une qualification différente de données de sortie dans un processus de validation du réseau neuronal.

### Description détaillée

### 1) Contexte

On considère une circulation de fluides polyphasiques dans une conduite avec au moins une phase liquide et au moins une phase gazeuse et l'on cherche à construire un réseau neuronal permettant, à partir d'un certain nombre de données d'entrée géométriques et physiques relatives à la conduite et de données physiques sur les fluides, de donner à chaque instant et pour chaque section de la veine fluide une estimation du mode d'écoulement.

### 2) entrées et sorties

Les données d'entrée sont par exemple :
- des données géométriques du réseau : diamètre, rugosité et angle d'inclinaison du conduit ;
- des données d'entrée qualifiant les effluents : masse volumique de gaz, masse volumique de liquide, viscosité du gaz, viscosité du liquide, etc. ;
- des données d'entrées caractérisant le mélange : tension superficielle gaz/liquide, fraction volumique de gaz, vitesse barycentrique du mélange.

Les données que le réseau va évaluer et délivrer sur deux sorties principales sont:
- dV, la différence de vitesse entre gaz et liquide ; et
- β, la fraction d'écoulement stratifié dans la partie de conduit dont on souhaite déterminer le type d'écoulement ; β ∈ [0; 1].

D'autres grandeurs qualifiant le type d'écoulement peuvent être calculées à partir de ces deux sorties.

### 3) structure du réseau

Pour relier entre elles les données d'entrée et de sortie, on construit un réseau de neurones de préférence de type MLP bien connu des gens de l'art, car il est particulièrement bien adapté à la modélisation de phénomènes physiques. En effet, sa structure permet de décrire tout à la fois les composantes dynamiques et statiques des phénomènes, en fixant même si nécessaire certains de ses paramètres à une valeur réifiée, et donc physiquement représentative. Ainsi, dans l'exemple, la connaissance d'équations physiques régissant les écoulements permet d'enrichir le réseau et de l'adapter au mieux aux phénomènes physiques qu'il modélise.

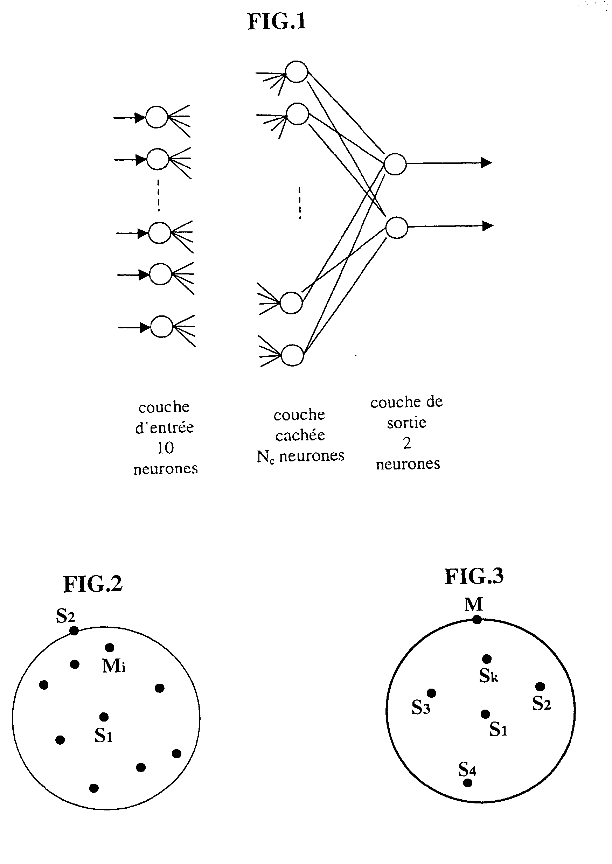

Le réseau de neurones comporte (Fig.1) trois couches : la couche d'entrée composée de dix neurones correspondant aux dix données (citées ci-dessus) du modèle physique complet, une couche de sortie de deux neurones correspondant aux deux paramètres recherchés dV et β, et une couche intermédiaire, dite couche cachée, dont le nombre de neurones N_{c} est optimisé. Le réseau est totalement connecté. La non linéarité de ce réseau est obtenue par une fonction d'activation sigmoïde régissant le comportement des neurones de la couche cachée. Les neurones de la couche de sortie peuvent être choisis linéaires ou non-linéaires. La fonction d'activation peut être par exemple la fonction identité.

### 4) Apprentissage : principe et mise en oeuvre dans l'exemple

### a) Principe

Les poids de cette structure sont déterminés à l'issue d'une phase d'apprentissage ; cette phase consiste à nourrir le réseau d'un ensemble de données constituant la base d'apprentissage du réseau, et à optimiser les poids du réseau par minimisation des erreurs constatées pour l'ensemble des échantillons de la base, entre les données de sortie issues du calcul du réseau et les données attendues à la sortie, données par la base. Les erreurs peuvent être les erreurs absolues entre les grandeurs d'entrée et de sortie ou les erreurs relatives, selon la performance désirée pour le réseau.

Les facultés de généralisation du réseau sont ensuite testées sur sa capacité à bien calculer les deux sorties pour des entrées qui lui sont inconnues.

### b) Mise en oeuvre

En pratique, outre la difficulté du choix des différents éléments constituant le réseau, la mise en place du réseau passe par une analyse poussée des données constituant la base d'apprentissage. En effet, même si un réseau est convenablement élaboré pour un problème donné, il peut donner in fine de mauvais résultats dans la mesure où la base d'apprentissage qui lui est fournie contient des éléments qui perturbent l'optimisation de l'ensemble de ses poids. Dans le cas particulier des écoulements de fluides, le problème est crucial ; de fait, les calculs de modes d'écoulements réalisés à partir de modèles complets et précis génèrent une base de données fortement inhomogène : par exemple, un résultat stipulant un écoulement stratifié peut être « noyé » dans un voisinage de points représentant un écoulement dispersé : ce point correspond donc soit un phénomène physique que le réseau de neurones doit pouvoir retrouver, soit un « singleton » que le réseau doit au contraire lisser pour assurer la continuité du résultat. La difficulté de l'analyse préalable des données réside donc dans la détermination de la nature de tels points, et, à plus grande échelle, des différents points de la base.

Pour cela, une méthode d'analyse a posteriori des résultats du réseau a été élaborée, qui identifie et distingue les données disponibles représentant les phénomènes physiques particuliers à modéliser, des résultats de calculs à ignorer. Cette méthode consiste à fabriquer des « compacts » autour de chacun des points singuliers considérés dans l'espace à n dimensions des entrées (n = 10 dans l'exemple décrit), afin d'évaluer le degré d'isolement de leur comportement ; ainsi, pour chaque « boule » créée sont comptabilisés les points singuliers et les points non singuliers, la proportion des premiers dans le compact donnant alors une mesure de leur isolement. Les termes « compacts et « boule » sont ici pris au sens topologique du terme.

Ainsi, le point S1 de la Fig.2 qui est au centre d'une boule et séparé du point singulier S2 le plus proche par un voisinage de nombreux points réguliers Mi, peut être considéré comme un singleton et donc être régularisé. Le point S1 de la Fig.3, au contraire, a pour voisinage immédiat un ou plusieurs points également singuliers S2, S3,... Sk. Dans un tel cas, il faut considérer que les points S1 à Sk sont la traduction d'un phénomène physique particulier dont il faut tenir compte par une adaptation du réseau neuronal.

Cette méthode de sélection permet d'identifier les points nécessaires pour informer suffisamment le réseau lors de la phase d'apprentissage. La base de points adéquats ainsi constituée est alors capable de le renseigner afin d'optimiser au mieux ses paramètres.

### 5) Résultats

Avec les outils et méthodes décrits ci-dessus, on obtient :
- une base de données nettoyée de tout point à comportement anormal et contenant uniquement les points riches en information pour cerner au mieux le système physique à identifier ;
- un réseau capable d'interpoler les différents types d'écoulements rencontrés, afin de ne plus générer de discontinuité, et également apte à tenir compte des phénomènes physiques particuliers dont on souhaite la modélisation malgré leur comportement atypique ; et finalement
- un outil donnant en temps réel une estimation des principales informations d'hydrodynamique.

## Revendications

1. Méthode pour estimer en temps réel le mode d'écoulement, en tous points d'une conduite de structure que l'on peut définir par un certain nombre de paramètres de structure, d'une veine de fluide polyphasique définie par plusieurs grandeurs physiques et comprenant au moins une phase liquide et au moins une phase gazeuse, **caractérisée en ce qu'**elle comporte :
- la formation d'un réseau neuronal non linéaire, défini par des poids permettant à chaque neurone de réaliser une somme pondérée de signaux appliquée à une fonction d'activation, et comportant une couche d'entrée avec autant d'entrées que de paramètres de structure et de grandeurs physiques, une couche de sortie avec autant de sorties que de grandeurs nécessaires à l'estimation du mode d'écoulement et au moins une couche intermédiaire comportant une fonction d'activation non linéaire ;
- la constitution d'une base d'apprentissage avec des tables prédéfinies reliant différentes valeurs obtenues pour les données de sortie aux valeurs correspondantes des données d'entrée ;
- une analyse des données de sortie dudit réseau neuronal permettant de trier, parmi les valeurs des données de sortie dudit réseau, les seules données pertinentes à prendre en compte dans la détermination itérative desdits poids dudit réseau neuronal ; et
- la détermination par itérations desdits poids dudit réseau neuronal permettant de relier correctement les valeurs dans les tables des données d'entrée et de sortie.

2. Méthode selon la revendication 1, **caractérisée en ce que** l'on forme un réseau totalement connecté.

3. Méthode selon l'une des revendications 1 ou 2, **caractérisée en ce que** les neurones de sortie sont linéaires.

4. Méthode selon la revendication 3, **caractérisée en ce que** la fonction d'activation des neurones de la couche de sortie est une fonction identité.

5. Système pour l'estimation en temps réel du mode d'écoulement, en tous points d'une conduite de structure que l'on peut définir par un certain nombre de paramètres de structure, d'une veine de fluide polyphasique définie par plusieurs grandeurs physiques et comprenant au moins une phase liquide et au moins une phase gazeuse, **caractérisé en ce qu'**il comporte :
- des moyens pour déterminer les caractéristiques d'un réseau neuronal, défini par des poids permettant à chaque neurone de réaliser une somme pondérée de signaux appliquée à une fonction d'activation, et comportant une couche d'entrée avec autant d'entrées que de paramètres de structure et de grandeurs physiques, une couche de sortie avec autant de sorties que de grandeurs nécessaires à l'estimation du mode d'écoulement et au moins une couche intermédiaire comportant une fonction d'activation non linéaire ;
- des moyens de stockage d'une base d'apprentissage avec des tables prédéfinies reliant différentes valeurs obtenues pour les données de sortie aux valeurs correspondantes des données d'entrée ;
- des moyens d'analyse des données de sortie du réseau de neurones permettant de trier, parmi les valeurs des données de sortie du réseau de neurones, les seules données pertinentes à prendre en compte dans la détermination itérative desdits poids dudit réseau neuronal ; et
- des moyens pour déterminer par itérations lesdits poids dudit réseau permettant de relier correctement les valeurs dans les tables des données d'entrée et des données de sortie.

## Claims

1. A method for estimating in real time the flow mode, at any point of a conduit having a structure which can be defined by a certain number of structural parameters, of a stream of polyphase fluid defined by several physical units of measurement and including at least one liquid phase and at least one gaseous phase, **characterised in that** it comprises:
- the formation of a non-linear neural network, defined by weights allowing each neuron to realise a weighted sum of signals applied to an activation function, and comprising an input layer with as many inputs as structural parameters and physical units of measurement, an output layer with as many outputs as units of measurement necessary for the estimation of the flow mode and at least one intermediate layer comprising a non-linear activation function;
- the constitution of a training set with predefined tables linking different values obtained for the output data to the corresponding values of the input data;
- an analysis of the output data of said neural network allowing the separation, amongst the output data values of said network, of the only pertinent data to be taken into account in the iterative determination of said weights of said neural network; and
- the determination by iterations of said weights of said neural network allowing the values in the input and output data tables to be linked correctly.

2. The method according to Claim 1, **characterised in that** a totally connected network is formed.

3. The method according to one of Claims 1 or 2, **characterised in that** the output neurons are linear.

4. The method according to Claim 3, **characterised in that** the activation function of the neurons of the output layer is an identity function.

5. A system for estimating in real time the flow mode, at any point of a conduit having a structure which can be defined by a certain number of structural parameters, of a stream of polyphase fluid defined by several physical units of measurement and including at least one liquid phase and at least one gaseous phase, **characterised in that** it comprises:
- means for determining the characteristics of a neural network, defined by weights allowing each neuron to realise a weighted sum of signals applied to an activation function, and comprising an input layer with as many inputs as structural parameters and physical units of measurement, an output layer with as many outputs as units of measurement necessary for the estimation of the flow mode and at least one intermediate layer comprising a non-linear activation function;
- means for storing a training set with predefined tables linking different values obtained for the output data to the corresponding values of the input data;
- means for analysing the output data of the neural network allowing the separation, amongst the output data values of the neural network, of the only pertinent data to be taken into account in the iterative determination of said weights of said neural network; and
- means for determining by iterations said weights of said network allowing the values in the input and output data tables to be linked correctly.

## Patentansprüche

1. Verfahren, um in Echtzeit an jedem Punkt einer Leitung, deren Struktur man durch eine bestimmte Anzahl Strukturparameter definieren kann, das Durchflussregime eines Stroms eines mehrphasigen Fluids zu bestimmen, das durch mehrere physikalische Größen bestimmt ist, und mindestens eine Flüssigphase und mindestens eine Gasphase umfasst, **dadurch gekennzeichnet, dass** es Folgendes umfasst:
- Bilden eines nichtlinearen neuronalen Netzwerkes, das durch Gewichte definiert ist, die es jedem Neuron erlauben, eine gewichtete Summe der an eine Aktivierungsfunktion angelegten Signale zu bilden, und das eine Eingabeschicht umfasst, mit so vielen Eingaben, wie Strukturparameter und physikalische Größen, und eine Ausgabeschicht, mit so vielen Ausgaben wie nötig, um das Durchflussregime abzuschätzen, und mindestens eine Zwischenschicht, die eine nichtlineare Aktivierungsfunktion umfasst;
- die Erstellung von Trainingsdaten, mit vordefinierten Tabellen, die verschiedene, für die für die Ausgabewerte erhaltene Daten mit den entsprechenden Eingabedaten verbinden;
- eine Analyse der Ausgabedaten des neuronalen Netzwerks, die es erlaubt, unter den Ausgabedaten des Netzwerks nur die wesentlichen Daten herauszufiltern, die für die iterative Bestimmung der Punkte des Neuronalen Netzwerkes zu berücksichtigen sind; und
- die iterative Bestimmung der Punkte des neuronalen Netzwerkes, die es erlaubt, korrekt die Werte in den Datentabellen für Eingabe und Ausgabe zu verbinden.

2. Verfahren nach Anspruch 1, **dadurch gekennzeichnet, dass** man ein völlig verknüpftes Netzwerk bildet.

3. Verfahren nach einem der Ansprüche 1 oder 2, **dadurch gekennzeichnet, dass** die Ausgabeneuronen linear sind.

4. Verfahren nach Anspruch 3, **dadurch gekennzeichnet, dass** die Aktivierungsfunktion der Neuronen der Ausgabeschicht eine Identitätsfunktion ist.

5. System, um in Echtzeit an jedem Punkt einer Leitung, deren Struktur man durch eine bestimmte Anzahl Strukturparameter definieren kann, das Durchflussregime eines Stroms eines mehrphasigen Fluids zu bestimmen, das durch mehrere physikalische Größen bestimmt ist, und mindestens eine Flüssigphase und mindestens eine Gasphase umfasst, **dadurch gekennzeichnet, dass** es folgendes umfasst:
- Mittel, um die Eigenschaften eines neuronalen Netzwerkes zu bestimmen, das durch Gewichte definiert ist, die es jedem Neuron erlauben, eine gewichtete Summe der an eine Aktivierungsfunktion angelegten Signale zu bilden, und das eine Eingabeschicht umfasst, mit so vielen Eingaben, wie Strukturparameter und physikalische Größen, und eine Ausgabeschicht, mit so vielen Ausgaben wie nötig, um das Durchflussregime abzuschätzen, und mindestens eine Zwischenschicht, die eine nichtlineare Aktivierungsfunktion umfasst;
- Mittel zur Speicherung von Trainingsdaten, mit vordefinierten Tabellen, die verschiedene, für die für die Ausgabewerte erhaltene Daten mit den entsprechenden Eingabedaten verbinden;
- Mittel zur Analyse der Ausgabedaten des neuronalen Netzwerks, die es erlauben, unter den Ausgabedaten des Netzwerks nur die wesentlichen Daten herauszufiltern, die für die iterative Bestimmung der Punkte des Neuronalen Netzwerkes zu berücksichtigen sind; und
- Mittel zur iterativen Bestimmung der Punkte des neuronalen Netzwerkes, die es erlauben, korrekt die Werte in den Datentabellen für Eingabe und Ausgabe zu verbinden.
